# EUROPEAN PATENT SPECIFICATION

(11) **EP 1 390 658 B1**
(45) Date of publication and mention of the grant of the patent: **07.05.2008**
(21) Application number: 01934770.7
(22) Date of filing: 21.05.2001
(51) Int. Cl.: F16L 55/16, H02G 9/06

(54) **METHOD AND DEVICE FOR LAYING A SEPARATE CHANNEL INSIDE A FLUID CARRYING DUCT**
VERFAHREN UND VORRICHTUNG ZUM ANLEGEN EINES GETRENNTEN KANALS INNERHALB EINER FLUIDBEFÖRDERUNGSLEITUNG
PROCEDE ET DISPOSITIF D'ETABLISSEMENT D'UN CANAL SEPARE DANS UN CONDUIT DE LIQUIDE

(43) Date of publication of application: 25.02.2004
(73) Proprietor: Top Cote AB, 541 27 Skövde (SE)
(72) Inventor: ANDERSSON, Carl-Johan, S-541 50 Skövde (SE); ANSGARIUSSON, Rolf, S-541 33 Skövde (SE)
(74) Representative: Andersson, Per-Olof
(86) International application number: PCT/SE2001/001129
(87) International publication number: WO 2002/001107

(56) References cited:
- EP-A1- 0 964 106
- WO-A1-00/06843
- WO-A1-99/65129
- DE-A1- 19 701 787
- DE-A1- 19 825 325
- DE-U1- 29 811 512

## Description

### Technical Field of the Invention

The present invention concerns a method of laying at least one separate channel inside a fluid carrying duct.

The present invention also concerns a liner for laying at least one separate channel inside a fluid carrying duct, said liner comprising an elongated, flexible sleeve being apt to be introduced into the duct, to be pressed against the inner periphery of the duct and to be hardened in this position to form an inner pipe inside the duct. Additionally the invention concerns a method of producing said liner.

### Background Art

Modern municipality systems for transporting fluids, electricity, digital and analogue information etc comprises a multiplicity of ducts, cables etc. When a new system, such as a computer communication system, is to be introduced new trenches must be dug to lay new cables and ducts. The costs associated with trenching are huge, especially in city centres.

A method for introducing a computer cable into sewage pipes is disclosed in WO 00/06843. Computer cables are either joined to the wall of a liner or are introduced in a cable pipe that is joined to the liner. The liner is given the shape of a "U" to be able to be pulled through the sewage pipe. When in place in the sewage pipe the liner is pressed against the inner walls of the sewage pipe by pressurised water, steam or gas. The liner, being soaked with a resin, is then cured.

Similar methods are disclosed in DE 198 25 325 and EP 0 964 106.

The above mentioned methods are not well suited for introducing tubes of large diameter or of large lengths into ducts.

### Summary of the Invention

The object of the present invention is to provide a method of introducing different types of tubes into a duct, which method is applicable for long tubes, large diameter tubes and tubes being both long and having a large diameter.

This object is achieved with a method of laying at least one separate channel inside a fluid carrying duct, which method is characterised in
that a liner, which comprises an elongated, flexible sleeve and at least one flexible tube joined to and extending along said sleeve and being around its circumference at least partly surrounded by a hardenable material, is introduced into said duct,
that the sleeve is then pressed against the inner periphery of the duct by means of a pressure acting inside the sleeve, while the tube at the same time is subjected to an internal pressure, that is large enough to dilate the tube and said hardenable material,
that the sleeve and said hardenable material are subjected to a hardening treatment for forming an inner pipe and said channel, respectively, inside the duct, and
that the pressures in the sleeve and in the tube are then relieved.

Preferably the liner is introduced into the duct by turning the liner inside out by forcing it through the duct. Turning the liner inside out is an efficient way of introducing liners into ducts, especially for longer ducts where friction makes other techniques difficult.

The sleeve is preferably made from a porous material and wherein the sleeve prior to introducing the liner into the duct is impregnated with a hardenable agent, which is hardened when the liner has been introduced into the duct. The impregnated porous material will, when hardened, form a strong and rigid pipe around the flexible tube. The channel thus formed will be protected all around its circumference from liquids, gases and pressure by the rigid pipe. According to an especially preferred method the sleeve holding the flexible tube is rolled during impregnation with said agent, whereby the sleeve and the tube are both flattened. By rolling the sleeve it is ensured that the hardeneable agent is evenly distributed in the porous material of the sleeve. Since the tube is flattened during rolling the hardenable agent is distributed evenly around the circumference of the tube. The advantage is that the channel formed after hardening is very tight and has a good mechanical strength all around the periphery of the channel.

According to a preferred embodiment the tube is withdrawn from said channel after said hardening treatment. By withdrawing the tube the cross section area of the channel is increased. Thus the channel may for example contain more or larger cables or carry a larger flow of fluid. The flexible tube may be reused in a new liner. Preferably the tube is withdrawn from said channel by turning the tube inside out. The friction between the outer surface of the tube and the inner surface of the separate channel may be too large for withdrawing the tube by just pulling in one of its ends. By turning the tube inside out the friction between the channel and the tube is minimised and thus the force necessary for withdrawing the tube is minimised. More preferably a lubricant is applied to the outer surface of the tube before joining the tube to the sleeve. A lubricant further decreases the friction between the outer surface of the tube and the inner surface of the channel.

Another object of the invention is to provide a liner that is suitable for introducing tubes, which are long and/or have a large diameter into ducts. This object is achieved by a liner for laying at least one separate channel inside a fluid carrying duct, said liner comprising an elongated, flexible sleeve being apt to be introduced into the duct, to be pressed against the inner periphery of the duct and to be hardened in this position to form an inner pipe inside the duct, said liner being characterised in that at least one flexible tube is joined to and extending along said sleeve, the tube being around its circumference at least partly surrounded by a hardenable material and being flexible enough to be flattened and being resistant to pressures being applied at the inside of the tube to dilate it during hardening of the sleeve and said hardenable material.

Preferably the sleeve is made of a material, that is chosen from the group of fibre and felt materials. Such materials are particularly advantageous for making liners, especially liners of the type which are impregnated by a hardenable agent.

The tube preferably comprises an armoured hose. Armoured hoses have several advantages; they are flexible, they can be flattened without permanent deformation and they can withstand fairly large pressures being applied at the inside thereof.

According to one preferred embodiment the outer surface of the armoured hose comprises at least partly bare reinforcement threads, the hose being apt to be bonded to the sleeve during said hardening. An advantage with this embodiment is that the tube is fixed to and forms the inner surface of the channel. There is thus no risk that the tube collapses inside the channel when pressure is relived.

According to another preferred embodiment a lubricant is applied to the outer surface of the tube and a thread runs through the tube and is attached to one end thereof, the thread being apt to pull the tube and turn it inside out for withdrawing it from the inner pipe. The lubricant and the thread make it very easy to withdraw the tube after hardening of the sleeve.

The separate channel has according to a preferred embodiment inner dimensions corresponding to cables for transporting digital and analogue information and electricity. Said cables are a result of recent developments in information technology. Digging separate trenches is costly and provides a problem of protecting the cables from environment caused damages. By introducing such cables in separate channels in ducts a safe environment for the cables is obtained at a low cost.

According to another preferred embodiment the separate channel has an inner diameter of at least 3 cm and is suitable for transporting urine. For reasons of protecting the environment separation of human urine from other faeces has become a prime interest to many municipalities. Usually trenches must be dug for separate urine carrying conduits. With the present invention such separate urine conduits can be obtained inside an existing sewer pipe.

Preferably the sleeve is designed so as to be introduced into a duct being a sewage pipe. Sewage pipes constitute an existing system in most municipalities. Often older sewage pipes needs repair. The present invention enables simultaneous repair of such sewage pipes and introduction of separate channels therein.

The sleeve preferably has a constant wall thickness around its circumference. A constant wall thickness of the sleeve enables a good reinforcement to the duct in which the liner is to be installed.

A third object of the invention is to provide a method of producing a liner, that is suitable for introducing tubes, which are long and/or have a large diameter into ducts. This object is accomplished by a method of producing a liner for laying at least one separate channel inside a fluid carrying duct, said liner comprising an elongated, flexible sleeve being apt to be introduced into the duct, to be pressed against the inner periphery of the duct and to be hardened in this position to form an inner pipe inside the duct, said method being characterised in
that the sleeve is turned inside out,
that at least one elongated, flexible tube extending along the sleeve is placed on the now outwardly facing inner surface of the sleeve,
that an elongated strip of a hardenable material is put over the tube placed on the inner surface of the sleeve, and
that the strip is attached to said inner surface of the sleeve along two longitudinal joints on either side of the tube, the strip and the sleeve thus forming a pocket containing the tube and keeping it in place.

Preferably the tube is flattened before the strip is attached to said inner surface of the sleeve. By flattening the tube it becomes much easier to obtain a proper and safe attachment of the strip to the sleeve. For instant a heated roller or a glue compressing roller may be used for attaching the strip to the sleeve.

Preferably the strip is attached to said inner surface of the sleeve by gluing, heat sealing or sewing. Said attachment methods decreases the risk of damaging the outer surface of the sleeve. Said outer surface should be intact and unbroken to ensure that the sleeve can withstand the pressure applied during hardening and that the thereby produced inner pipe thus has an unbroken outer surface in close contact with the inner surface of the duct. The inner pipe thus provides the duct with a required reinforcement with respect to load acting on the outside of the duct.

### Brief description of the drawings

The invention will be presented in a more detailed way with reference to the following drawings:
Fig 1a is cross section of a liner according to a first embodiment of the invention.
Fig 1b is a schematic perspective view of a tube.
Fig 2 is a cross section of the liner in fig 1 after the liner has been forced into a duct.
Fig 3 shows the liner in fig 2 after a sleeve and two tubes have been dilated.
Fig 4 shows the sleeve in fig 2 after it has been hardened and the tubes have been withdrawn
Fig 5a is a cross section of a part of a liner according to a second embodiment of the invention.
Fig 5b is a perspective view and shows a tube of the embodiment in fig 5a.
Fig 6 shows the sleeve of fig 5a after it has been hardened inside a duct.

### Detailed Description of the Preferred Embodiments of the Invention

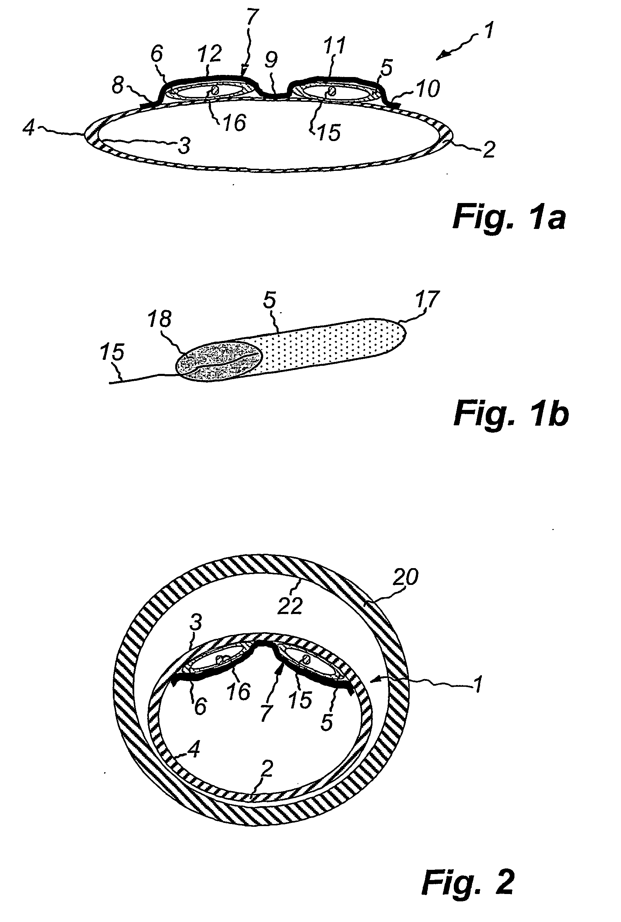

Fig 1a shows a liner 1 according to the invention. The liner 1 comprises a flexible sleeve 2. The sleeve 2 as shown in fig 1a is turned outside in compared to the state it is supposed to have when installed. Thus the outer surface 3 of the sleeve 2 is at the inside in fig 1a and the inner surface 4 of the sleeve 2 is at the outside in fig 1a. Two tubes 5, 6 are located on the inner surface 4 of the sleeve 2. A strip 7 covers the tubes 5,6 and is attached to the sleeve 2 along longitudinal attachment lines 8, 9 and 10. The attachment lines 8, 9, 10 thus extend along the liner 1 and define pockets 11, 12 encapsulating the respective tubes 5, 6.

The sleeve 2 is preferably made from a felt or fibre material, a nonwoven material or a similar material suitable for being impregnated by a hardenable agent such as a resin. The strip 7 may be made from the same material as the sleeve or another material apt to be impregnated by the hardenable agent.

The flexible tubes 5, 6 are made from an armoured plastic hose. The tubes 5, 6 can be flattened without obtaining permanent fractures. The tubes 5, 6 can withstand internal pressures without getting broken.

Each tube 5, 6 has an inner thread 15, 16. Each thread 15, 16 is attached to a first end 17 of the tube 5, 6. The thread runs through the tube 5, 6, as shown in fig 1b, and ends just outside a second end 18 of the tube 5, 6.

The liner 1 is impregnated with a hardenable agent and is then introduced into a sewage duct 20 as shown in fig 2. The introduction of the liner 1 into the duct 2 can be carried out using water pressure, steam, vacuum, gas pressure, a rope or similar known technologies. During the introduction the sleeve 2 has been turned inside out resulting in that the outer surface 3 of the sleeve 2 is now at the outside and is in partial contact with the inner surface 22 of the duct 20. The tubes 5, 6 and the strip 7 are at the inside of the sleeve 2. Introduction of liners into ducts by turning them inside out is a known technology and is described in e.g. US 3 494 813 hereby incorporated by reference.

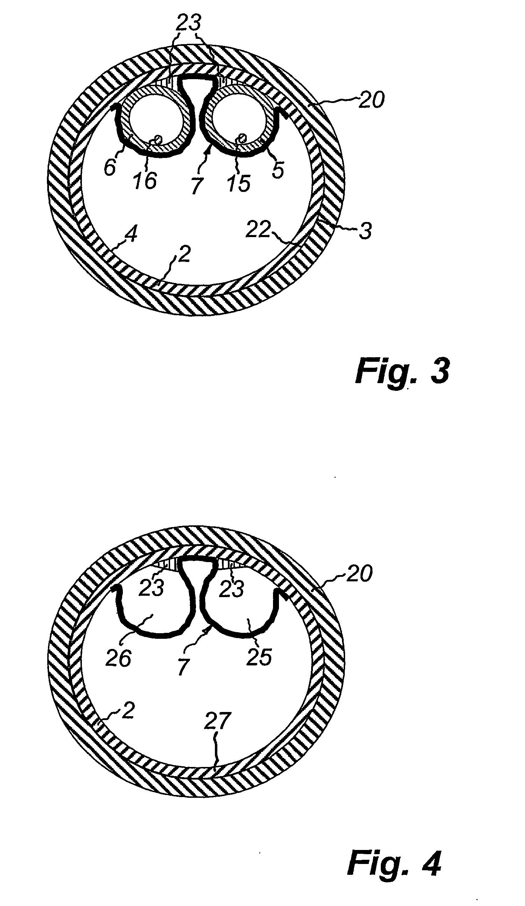

As shown in fig 3 the sleeve 2 has been dilated by pressure acting inside it. The outer surface 3 of the dilated sleeve is thus in close contact with the inner surface 22 of the duct 20. The pressurised medium causing the pressure is preferably steam, water or gas. It is important that the outer surface 3 and thus the outer circumference of the sleeve 2 is unbroken and as circular as possible to impart maximum internal strength to the duct 20. The tubes 5, 6 have also been dilated by internal pressures applied at the inside of the tubes 5, 6. The pressure acting inside the tubes 5, 6 may be generated by the same medium as the medium generating the pressure inside the sleeve 2. However the pressure acting inside each tube 5,6 is controlled independently of the pressure inside the sleeve 2, thus ensuring that the tubes 5, 6 may be sufficiently dilated against the pressure inside the sleeve acting on the outside of the tube 5, 6. The small space between the tube 5, 6 and the strip 7 has been filled with an accumulation 23 of hardenable material. The tube 5, 6 is thus covered with hardenable material around its circumference.

Fig 4 shows the liner 1 after it has been hardened and after the tubes 5, 6 have been withdrawn. The strip 7, which has also been hardened, now forms two separate channels 25, 26. Since the strip 7 as well as the sleeve 2 have been impregnated with the hardenable agent and then hardened the channels 25, 26 are tight and have no gas or liquid contact with sewage transported in the inner pipe 27 formed by the sleeve 2.

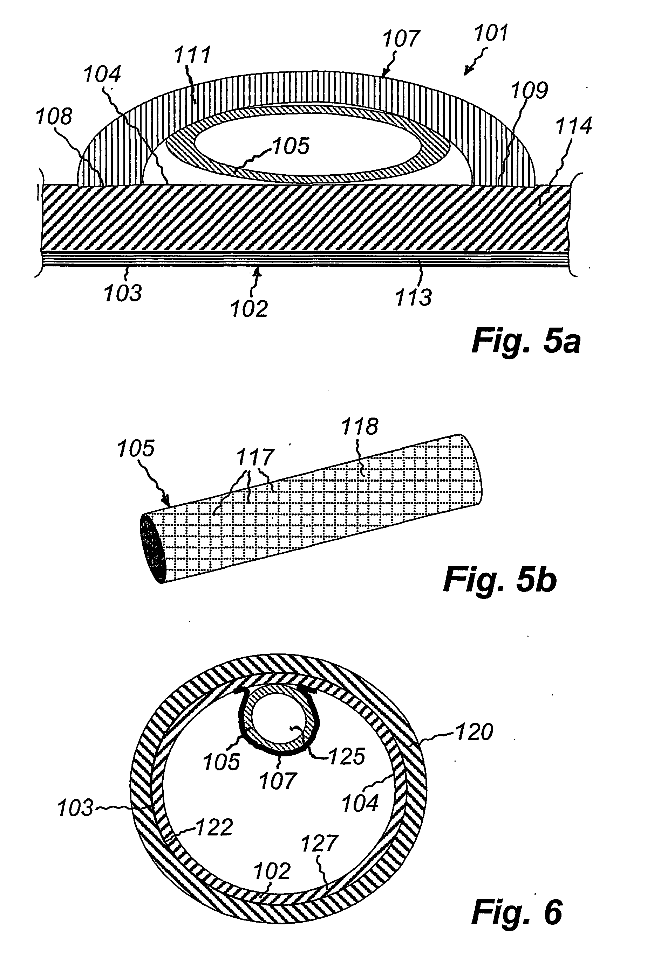

Fig 5a shows a second embodiment of the present invention. A liner 101 has a sleeve 102, which has basically the same structure as the sleeve 2 shown in fig 1a and is thus only shown in part. A tube 105 is placed on top of the sleeve 102. A strip 107 covers the tube 105 and is attached to the sleeve 102 along longitudinal attachment lines 108 and 109. The attachment lines 108, 109 extend along the liner 101 and define a pocket 111 encapsulating the tube 105. The sleeve 102 comprises two layers 113, 114. At the outer surface 103 of the sleeve 102 there is an air and liquid tight sealing layer 113 made from a flexible polymer material. The purpose of this layer 113 is to ensure that neither gas, steam, water or hardenable agent may escape from the sleeve 102 through the outer surface 103 when the inside of the sleeve 102 is pressurized. The sleeve 102 also comprises a base layer 114 attached to the sealing layer 113. The base layer 114 is made from a felt or fibre material, a nonwoven material or a similar material suitable for being impregnated by a hardenable agent such as a resin. The strip 107 may be made from the same material as the base layer 114 or another material apt to be impregnated by the hardenable agent. The strip 107 is permeable to the hardenable agent.

The tube 105 is made from an armoured plastic or rubber hose. The tube 105 can be flattened without obtaining permanent fractures. Threads 117 form an armour 118 at the outside of the tube 105. The threads 117 are partly bare as shown in fig 5b, that is, the threads 117 are only partly covered with the plastic material of the tube 105. During impregnation of the sleeve 102 and the strip 107 the threads 117 will also be impregnated since the hardenable agent may pass through the strip 107. Thus during hardening the armour 118 of the tube 105 will be bonded to the inner surface 104 of the sleeve 102 and to the strip 107. The tube 105 thus is firmly fixed to the sleeve 102 and the strip 107.

Fig 6 shows the liner 101 after it has been hardened inside a duct 120. The outer surface 103 of the sleeve is firmly pressed against the inner surface 122 of the duct 120. The pressure inside the tube 105 has been relieved but, since the armour 118 of the tube 105 is now fixed to the strip 107 and the inner surface 104 of the sleeve 102, the tube 105 does not collapse but remains in its dilated or expanded state. The tube 105 thus forms a separate channel 125. The tube 105 is tight. Thus the channel 125 has no gas or liquid contact with sewage transported in the inner pipe 127 formed by the sleeve 102.

A method of producing a liner 1; 101 as described above may comprise the following steps. First a sleeve 2; 102 is formed from an elongated sheet of material according to methods known in the art. The sleeve 2; 102 is then turned inside out so that the outer surface 3; 103 of the sleeve 2; 102 is at the inside and the inner surface 4; 104 of the sleeve 2; 102 is at the outside. As alternative the sleeve 2; 102 may be manufactured in such a way that it is turned outside in from the beginning. The step of turning the sleeve 2; 102 inside out is then so to say performed during manufacturing of the sleeve 2; 102. Preferably the sleeve 2; 102 is flattened to make it easier to work with. Sleeves 2; 102 made from materials with low structural stiffness are usually flattened by themselves and sleeves 2; 102 made from a stiffer material may be flattened by hand or by rolling them with a roller or similar means. One or several tubes 5, 6; 105 are then placed on top of the flattened sleeve 2; 102. The tubes 5, 6, which are intended to be withdrawn after a hardening, are preferably provided with a thread 15, 16 as described above. Preferably each tube 5, 6 is also greased with a lubricant, preferably silicone grease, on the outside to make it easier to withdraw the tube 5, 6 after hardening. A strip 7; 107 made from an elongated sheet of material is then placed on top of the tubes 5, 6; 105 in such a way that the tubes 5, 6; 105 are completely covered. The strip 7; 107 is then attached to the sleeve 2; 102 along the attachment lines 8, 9, 10; 108, 109. The attachment of the strip 7; 107 may be made by e.g. gluing, heat sealing, such as welding or melting, or sewing. The method used should not inflict damage to the outer surface 3; 103 of the sleeve 2; 102. Preferably the tubes 5, 6; 105 are flattened prior to attaching the strip 7, 107 to the sleeve 2, 102 to make the attachment procedure easier. It is important that the attachment lines 8, 9, 10; 108, 109 have a good quality along the strip 7; 107 not to obscure the integrity of the pockets 11, 12; 111 thereby formed. The pockets 11, 12; 111 must encapsulate the tubes completely to ensure that the separate channels 25, 26; 125 become completely tight all along their length. The liner 1; 101 is then ready for being introduced into a duct 20; 120.

A method of laying a separate channel 25, 26; 125 inside a duct 20; 120 may comprise the following steps. A liner 1; 101 as described above is applied with a hardenable agent, e.g. a vinyl ester resin, using a known type of rollers for liners. The rolling is a very important step to ensure that the hardenable agent is distributed evenly in the material of the sleeve 2; 102, in the strip 7; 107 and all around the outer surface of each tube 5, 6; 105. If the armour 118 of the tube 105 is to be fixed to the strip 107 it is especially important that the hardenable agent gets in contact with the tube 105 all around its outer circumference. The use of rolling requires, of course, that the sleeve 2; 102, the strip 7; 107 and the tubes 5, 6; 105 are all flexible enough to be rolled and flattened without obtaining permanent fractures. The liner is then introduced into the duct 20; 120 as described above. A preferred embodiment is to use hot water under pressure or steam under pressure to force the liner 1; 101 to be introduced into the duct 20; 120 by turning the liner 1; 101 inside out. The hot water or the steam may then also serve as a trigger for the hardening reaction. The process of turning the liner inside out is possible thanks to the fact that the tubes 5, 6; 105 are flexible. The fact that the tubes 5, 6; 105 can be flattened without obtaining permanent damages further decreases the force required to introduce the liner 1; 101 into the duct 20; 120. After the liner 1; 101 has been introduced into the duct 20; 120 a pressure is applied to the inside of the sleeve 2; 102. This pressure, which may be generated by e.g. pressurised air, gas or water or the above mentioned hot water or steam, presses the outer surface 3; 103 of the sleeve 2; 102 against the inner surface 22; 122 of the duct 20; 120. The pressure must be high enough to ensure a tight fit between the sleeve 2; 102 and the duct 20; 120 in order to obtain the maximum mechanical strength of the so formed inner pipe 27; 127. A typical pressure to be applied inside a sleeve 2; 102 is about 50-100 kPa (overpressure). Internal pressures, independent of the pressure applied inside the sleeve 2; 102, are applied inside the tubes 5, 6; 105. The source of the internal pressures may be the same as the source providing the pressure acting inside the sleeve 2; 102 or another source. A preferred medium is pressurised air. Fittings for pressurised air may quite easily be fitted to the tubes 5, 6; 105. Another preferred medium is pressurised water. A typical internal pressure to be applied inside each tube 5, 6; 105 is about 100-2000 kPa (overpressure). Of course the exact level of pressure is adjusted to ensure that the required dilation of the tube 5, 6; 105 is obtained under the actual pressure acting inside the sleeve 2; 102. The internal pressure acting inside the tube 5, 6; 105 must be higher, and often quite much higher, than the pressure applied inside the sleeve 2; 102 in order to avoid that the tube 5, 6; 105 becomes oval. The hardenable agent is then hardened while both the sleeve 2; 102 and the tubes 5, 6; 105 are maintained in their dilated state. Hardening of the agent may be performed by any of several known methods such as by means of hot water, steam, hot gas, UV-light etc. The time to complete hardening of the hardenable agent may vary from about 0,5 hours up to several days. After hardening a stiff internal pipe 27; 127 and stiff separate channels 25, 26; 125 have been formed inside the duct 20; 120. The pressure acting inside the sleeve 2; 102 and the internal pressures acting inside the tubes 5, 6; 105 is then relieved. When the tubes 5, 6 are to be withdrawn from the separate channels 25, 26, the free ends of the threads 15, 16 are gripped at the second end 18 of each tube 5, 6. By pulling the thread, the respective tube 5, 6 turns outside in at its first end 17 and may thus be withdrawn. If the tube 105 is to remain within the separate channel 125 then the separate channel 125 is immediately ready for use. If necessary openings for branch lines can be cut in the walls of the inner pipe 27; 127 and in the separate channels 25 ,26; 125.

It is obvious to a man skilled in the art that many additional embodiments are possible within the scope of the invention as claimed in the enclosed claims.

The separate channels 25, 26; 125 are suitable for computer cables and electrical cables. In such a case the diameter or any other relevant parameter describing the cross section of the separate channel is adapted to house the required number of cables. When the demands for a sealed environment are very strict it is preferred to let the tube 105 remain inside the separate channel 125. It is often very attractive to introduce such cables in existing sewage ducts since at lot of trenching may be avoided. At the same time the liner 1; 101 provides the sewage duct 20, 120 with increased mechanical strength, seals any leakage and provides a smooth, low friction inner surface.

In another preferred embodiment the separate channel 25, 26; 125 is used for transporting urine. For environmental reasons it is attractive to separate the urine from other faeces and use it as a fertiliser. By laying a separate channel 25, 26; 125 inside an existing sewage duct 20 it is possible to achieve such separation of urine at a very low cost and without trenching. To avoid flow restrictions the diameter of the separate channel 25, 26; 125 is preferably at least about 3 cm.

It is of course possible to lay several separate channels 25, 26; 125 for different purposes inside a duct. Thus separate channels for computer cables, electric cables, telephone cables and for transporting urine or drinking water may be provided in one and the same duct. This can be an advantage when building new houses and villas since only one trench and one large duct may be used for transporting all mediums required to be supplied to that house or villa. In such a case a duct with a very thin wall thickness could be used whereas the mechanical strength and the resistance to external and internal environment is entirely provided by the liner.

Another area where the present invention may be used is ventilation systems. Many ventilation ducts are leaking and needs repair. By introducing a liner according to the invention, the liner having proper dimensions for the task, a sealing of the ventilation duct can be obtained. At the same time separate channels for computer cables can be laid inside the ventilation duct using the liner and the method described above. This use of the invention is especially interesting for older houses and villas that need a repair of the ventilation ducts and where installation of an internal computer network is desired. The invention is useful also for offices needing repair of ventilation ducts and where a computer network extends between several rooms and floors.

The invention is applicable also for other methods of introducing a liner into a duct. Such other methods include methods in which a liner is pulled, without turning the liner inside out, through the duct using a wire, such as described in US 5 340 524, hereby incorporated by reference. It is however preferable to introduce the liner by turning it inside out due to the lower friction against the inner surface of the duct and the lower risk of damaging the liner.

Also sleeves made entirely from thermoplastic polymers, such as described in US 4 998 871, hereby incorporated by reference, may be used in the present invention. Due to the easier handling and better adaptability to the inner surface of the duct felt and fibre materials are usually preferred.

The tubes can be made from any suitable material such as plastics, rubber, fibre or felt materials and other materials. Examples of materials include, but are not limited to, styrene-butadiene rubber (SBR), nitrile rubber, ethylene-propylene rubber (EPDM), polyvinyl chloride (PVC) plastic and other materials. It is also possible to make tubes from several materials, such as a tube comprising an inner layer made of a plastic or rubber material and an outer layer made of a fibre or felt material. Tubes comprising an inner layer made of rubber and an outer layer made of plastic can also be used. The important parameters are that the tube must be dilated by and withstand a pressure applied at the inside thereof and that the tube is flexible enough. If hardening is conducted using high temperature methods, such as by steam or by hot water, the tube must withstand these conditions and temperatures. Preferably the tube is tight so that a medium applying the internal pressure does not leak through the wall of the tube. If the tube is to remain in the separate channel it is preferred that the tube has an inner surface suitable for the medium to be transported therein. An example is special tubes apt for transporting drinking water inside a duct carrying sewage. In such a case it is very important that the tube is completely sealed. Other examples include process industry where tubes resistant to e.g. strong acids or bases may be used for transporting hazardous, liquid waste materials inside common sewage ducts. If computer cables are to be inserted in the tube it is recommended that the tube has an inner surface which is smooth and has a low friction.

The wall thickness of the tube is preferably as thin as possible, still meeting the requirements regarding pressure and tightness. A tube with a thin wall is easier to roll flat and makes the sleeve easier to force through the duct. A thin wall also makes it easier to withdraw the tube by turning it inside out. One way of producing such a tube is to start with a inner layer of a hose, add an armour on the outside of said inner layer but omit the outer layer of said hose. Thereby a tube with partly bare reinforcement threads and a thin wall is produced using almost a standard procedure for producing armoured hoses.

It is often preferable to make the tubes slightly longer than the liner to make it easier to connect the source of the internal pressure. Such connection may often be done using common fast couplings for air, water or steam. When joining the tubes of two liners after hardening, e.g. the tubes of two liners installed in crossing ducts, often the same fast couplings can be used for the purpose.

The tubes may be embedded in the actual wall of the sleeve. This will, however, make the wall thickness of the sleeve uneven around the circumference thereof. The tube will then decrease the structural strength of the inner pipe formed by the sleeve after hardening and may even result in an incipient fracture. If the liner is introduced in a sewage duct it is often important that the inner pipe formed after hardening imparts reinforcement of the duct so that it can withstand the load caused by soil on the outside of the duct. For that reason it is thus preferable that the sleeve has a constant wall thickness and that the tubes are held in place by a separate strip. For the same reason the sleeve should have an unbroken circumference.

## Claims

1. Method of laying at least one separate channel (25, 26; 125) inside a fluid carrying duct (20; 120) **characterised in**
**that** a liner (1; 101), which comprises an elongated, flexible sleeve (2; 102) and at least one flexible tube (5, 6; 105) joined to and extending along said sleeve (2; 102) and being around its circumference at least partly surrounded by a hardenable material (7; 107), is introduced into said duct (20; 120),
**that** the sleeve (2; 102) is then pressed against the inner periphery (22; 122) of the duct by means of a pressure acting inside the sleeve (2; 102), while the tube (5, 6; 105) at the same time is subjected to an internal pressure, that is large enough to dilate the tube (5, 6; 105) and said hardenable material (7; 107),
**that** the sleeve (2; 102) and said hardenable material (7; 107) are subjected to a hardening treatment for forming an inner pipe (27; 127) and said channel (25, 26; 125), respectively, inside the duct (20; 120), and
**that** the pressures in the sleeve (2; 102) and in the tube (5, 6; 125) are then relieved.

2. Method according to claim 1, wherein the liner (1; 101) is introduced into the duct (20; 120) by turning the liner (1; 101) inside out by forcing it through the duct (20; 120).

3. Method according to claim 1 or 2, wherein the sleeve (2; 102) is made from a porous material and wherein the sleeve (2; 102) prior to introducing the liner (1; 101) into the duct (20; 120) is impregnated with a hardenable agent, which is hardened when the liner (1; 101) has been introduced into the duct (2; 120).

4. Method according to claim 3, wherein the sleeve (2; 102) holding the flexible tube (5, 6; 105) is rolled during impregnation with said agent, whereby the sleeve (2; 102) and the tube (5, 6; 105) are both flattened.

5. Method according to any of the preceding claims, wherein the tube (5, 6) is withdrawn from said channel (25, 26) after said hardening treatment.

6. Method according to claim 5, wherein the tube (5, 6) is withdrawn from said channel (25, 26) by turning the tube (5, 6) inside out.

7. Method according to claim 5 or 6, wherein a lubricant is applied to the outer surface of the tube (5, 6) before joining the tube (5, 6) to the sleeve (2).

8. Liner for laying at least one separate channel (25, 26; 125) inside a fluid carrying duct (20; 120), said liner (1; 101) comprising an elongated, flexible sleeve (2; 102) being apt to be introduced into the duct (20; 120), to be pressed against the inner periphery (22; 122) of the duct (20; 120) and to be hardened in this position to form an inner pipe (27; 127) inside the duct (20; 120), **characterised in that** at least one flexible tube (5, 6; 125) is joined to and extending along said sleeve (2; 102), the tube (5, 6; 105) being around its circumference at least partly surrounded by a hardenable material (7; 107) and being flexible enough to be flattened and being resistant to pressures being applied at the inside of the tube (5, 6; 105) to dilate it during hardening of the sleeve (2; 102) and said hardenable material (7; 107).

9. Liner according to claim 8, wherein the sleeve (2; 102) is made of a material, that is chosen from the group of fibre and felt materials.

10. Liner according to claim 8 or 9, wherein the tube comprises an armoured hose (5, 6; 105).

11. Liner according to claim 10, wherein the outer surface of the armoured hose (105) comprises at least partly bare reinforcement threads (117), the hose (105) being apt to be bonded to the sleeve (102) during said hardening.

12. Liner according to any of claims 8-11, wherein the tube (5, 6; 105) is comprised of a material making it suitable for transporting a liquid medium.

13. Liner according to any of claims 8-10, wherein a lubricant is applied to the outer surface of the tube (5, 6) and a thread (15, 16) runs through the tube (5, 6) and is attached to one end (17) thereof, the thread (15, 16) being apt to pull the tube (5, 6) and turn it inside out for withdrawing it from the inner pipe (27).

14. Liner according to any of claims 8-13, wherein the separate channel (25, 26; 125) has inner dimensions corresponding to cables for transporting digital and analogue information and electricity.

15. Liner according to any of claims 8-13, wherein the separate channel (25, 26; 125) has an inner diameter of at least 3 cm and is suitable for transporting urine.

16. Liner according to any of claims 8-15, wherein the sleeve (2; 102) is designed so as to be introduced into a duct (20; 120) being a sewage pipe.

17. Liner according to any of claims 8-16, wherein the sleeve (2; 102) has a constant wall thickness around its circumference.

## Patentansprüche

1. Verfahren zum Verlegen mindestens eines separaten Kanals (25, 26; 125) innerhalb einer Fluidbeförderungsleitung (20; 120),
**dadurch gekennzeichnet,**
**dass** ein Liner (1; 101), der eine längliche, flexible Hülse (2; 102) und mindestens einen flexiblen Schlauch (5, 6; 105) umfasst, der mit der Hülse (2; 102) verbunden ist und sich längs dieser erstreckt und an seinen Umfang mindestens teilweise umgeben wird von einem aushärtbaren Material (7; 107), in die Leitung eingeführt (20; 120) wird,
**dass** die Hülse (2; 102) ist dann gegen den Innenumfang (22; 122) der Leitung gepresst wird mittels eines Drucks, der innerhalb der Hülse (2; 102) wirkt, während der Schlauch (5, 6; 105) gleichzeitig einem inneren Druck ausgesetzt wird, der ist groß genug ist um den Schlauch (5, 6; 105) und das aushärtbare Material (7; 107) zu weiten,
**dass** die Hülse (2; 102) und das aushärtbare Material (7; 107) einer Aushärtungsbehandlung unterworfen werden zur Bildung eines Innenrohres (27; 127) beziehungsweise des Kanals (25, 26; 125) innerhalb der Leitung (20; 120), und
**dass** der Druck in der Hülse (2; 102) und im Schlauch (5.6; 125) dann abgelassen wird.

2. Verfahren gemäß Anspruch 1, bei welchem der Liner (1; 101) in die Leitung eingeführt (20; 120) wird durch Umstülpen des Liners (1; 101) während er durch die Leitung (20; 120) gezwungen wird.

3. Verfahren gemäß Anspruch 1 oder 2, bei welchem die Hülse (2; 102) aus einem porösen Material hergestellt wird und bei welchem die Hülse (2; 102) vor dem Einführen des Liners (1; 101) in die Leitung (20; 120) mit einem aushärtbaren Mittel imprägniert wird, das nach dem Einführen des Liners (1; 101) in die Leitung (2; 120) ausgehärtet wird.

4. Verfahren gemäß Anspruch 3, bei welchem die Hülse (2; 102), die den flexiblen Schlauch (5, 6; 105) enthält, während der Imprägnierung mit dem genannten Mittel gerollt wird, wodurch die Hülse (2; 102) und der Schlauch (5, 6; 105) beide flachgedrückt werden.

5. Verfahren gemäß einem der vorangehenden Ansprüche, bei welchem der Schlauch (5, 6) nach der Aushärtungsbehandlung aus dem Kanal (25, 26) entfernt wird.

6. Verfahren gemäß Anspruch 5, bei welchem der Schlauch (5, 6) aus dem Kanal (25, 26) entfernt wird durch Umstülpen des Schlauches (5, 6).

7. Verfahren gemäß Anspruch 5 oder 6, bei welchem ein Schmiermittel auf der Außenseite des Schlauchs (5, 6) aufgetragen wird bevor der Schlauch (5, 6) mit der Hülse (2) verbunden wird.

8. Liner zum Verlegen mindestens eines separaten Kanals (25, 26; 125) innerhalb einer Fluidbeförderungsleitung (20; 120), wobei der Liner (1; 101) eine längliche, flexible Hülse (2; 102) umfasst, die vorgesehen ist in die Leitung (20; 120) eingeführt, gegen den Innenumfang (22; 122) der Leitung (20; 120) gepresst und in dieser Position ausgehärtet zu werden um ein Innenrohr (27; 127) innerhalb der Leitung (20; 120) zu bilden, **dadurch gekennzeichnet, dass** mindestens ein flexibler Schlauch (5, 6; 125), der sich längs der Hülse (2; 102) erstreckt, mit dieser verbunden ist, wobei der Schlauch (5, 6; 105) an seinen Umfang zumindest teilweise von einem aushärtbaren Material (7; 107) umgeben und flexibel genug ist um flachgedrückt zu werden und Drücken standhält, die im Inneren des Schlauches (5, 6; 105) angelegt werden um diesen zu weiten während der Aushärtung der Hülse (2; 102) und des aushärtbaren Materials (7; 107).

9. Liner gemäß Anspruch 8, bei welchem die Hülse (2; 102) aus einem Material besteht, das aus der Gruppe der Faser- und Filzmaterialien gewählt wird.

10. Liner gemäß Anspruch 8 oder 9, bei welchem der Schlauch einen armierter Schlauch ist (5, 6; 105).

11. Liner gemäß Anspruch 10, bei welchem die Außenseite des armierten Schlauches (105) wenigstens teilweise bloße Armierungsfäden (117) aufweist, wobei der Schlauch (105) vorgesehen ist während der Aushärtung mit der Hülse (102) verbunden zu werden.

12. Liner gemäß einem der Ansprüche 8-11, bei welchem der Schlauch (5, 6; 105) aus einem Material besteht, das zur Beförderung eines flüssigen Mediums geeignet ist.

13. Liner gemäß einem der Ansprüche 8-10, bei welchem ein Schmiermittel auf der Außenseite des Schlauches (5, 6) aufgetragen und ein Faden (15, 16), der durch den Schlauch (5, 6) läuft, an einem Ende (17) davon befestigt ist, wobei der Faden (15, 16) dazu vorgesehen ist am Schlauch (5, 6) zu ziehen und ihn zum Entfernen aus dem Innenrohr (27) umzustülpen.

14. Liner gemäß einem der Ansprüche 8-13, bei welchem der separate Kanal (25, 26; 125) Innenmaße hat, die den Maßen von Kabeln zum Befördern von digitaler und analoger Information und von Elektrizität entsprechen.

15. Liner gemäß einem der Ansprüche 8-13, bei welchem der separate Kanal (25, 26; 125) einen Innendurchmesser von mindestens 3 cm hat und geeignet ist zum Befördern von Harn.

16. Liner gemäß einem der Ansprüche 8-15, bei welchem die Hülse (2; 102) vorgesehen ist in eine Leitung (20; 120) eingeführt zu werden, die ein Abwasserrohr ist.

17. Liner gemäß einem der Ansprüche 8-16, bei welchem die Hülse (2; 102) um ihren Umfang eine gleichbleibende Wandstärke hat.

## Revendications

1. Procédé de dépôt en couche d'au moins un canal séparé (25, 26; 125) à l'intérieur d'un conduit transportant un fluide (20; 120) **caractérisé en**
**ce qu'**une gaine (1; 101), qui comprend un manchon flexible, allongé (2; 102) et au moins un tube flexible (5, 6; 105) joint à et s'étendant le long dudit manchon (2; 102) et étant autour de sa circonférence au moins partiellement entouré d'un matériau durcissable (7; 107), est introduite dans ledit conduit (20; 120),
**en ce que** le manchon (2; 102) est ensuite pressé contre la périphérie interne (22; 122) du conduit au moyen d'une pression agissant à l'intérieur du manchon (2; 102), tandis que le tube (5, 6; 105) au même moment est soumis à une pression interne, qui est suffisamment grande pour dilater le tube (5, 6; 105) et ledit matériau durcissable (7; 107),
**en ce que** le manchon (2; 102) et ledit matériau durcissable (7; 107) sont soumis à un traitement de durcissement pour former une canalisation interne (27; 127) et ledit canal (25, 26; 125), respectivement, à l'intérieur du conduit (20; 120), et
**en ce que** les pressions dans le manchon (2; 102) et dans le tube (5, 6; 125) sont ensuite libérées.

2. Procédé selon la revendication 1, dans lequel la gaine (1; 101) est introduite dans le conduit (20; 120) en tournant la gaine (1; 101) à l'intérieur en la forçant à travers le conduit (20; 120).

3. Procédé selon la revendication 1 ou 2, dans lequel le manchon (2; 102) est fabriqué à partir d'un matériau poreux et dans lequel le manchon (2; 102) avant l'introduction de la gaine (1; 101) dans le conduit (20; 120) est imprégné d'un agent durcissable, qui est durci lorsque la gaine (1; 101) a été introduite dans le conduit (2; 120).

4. Procédé selon la revendication 3, dans lequel le manchon (2; 102) maintenant le tube flexible (5, 6; 105) est roulé durant l'imprégnation avec ledit agent, par le biais duquel le manchon (2; 102) et le tube (5, 6; 105) sont tous deux aplatis.

5. Procédé selon l'une quelconque des revendications précédentes, dans lequel le tube (5, 6) est retiré dudit canal (25, 26) après ledit traitement de durcissement.

6. Procédé selon la revendication 5, dans lequel le tube (5, 6) est retiré dudit canal (25, 26) en tournant le tube (5, 6) à l'envers.

7. Procédé selon la revendication 5 ou 6, dans lequel un lubrifiant est appliqué à la surface externe du tube (5, 6) avant de joindre le tube (5, 6) au manchon (2).

8. Gaine pour déposer en couche au moins un canal séparé (25, 26; 125) à l'intérieur d'un conduit transportant un fluide (20; 120), ladite gaine (1; 101) comprenant un manchon flexible allongé (2; 102) étant apte à être introduit dans le conduit (20; 120), à être pressé contre la périphérie interne (22; 122) du conduit (20; 120) et à être durci dans cette position pour former une canalisation interne (27; 127) à l'intérieur du conduit (20; 120), **caractérisé en ce qu'**au moins un tube flexible (5, 6; 125) est joint à et se s'étendant le long dudit manchon (2; 102), le tube (5, 6; 105) étant autour de sa circonférence au moins partiellement entouré d'un matériau durcissable (7; 107) et étant suffisamment flexible pour être aplati et étant résistant aux pressions qui sont appliquées à l'intérieur du tube (5, 6; 105) pour le dilater durant le durcissement du manchon (2; 102) et dudit matériau durcissable (7; 107).

9. Gaine selon la revendication 8, dans laquelle le manchon (2; 102) est fabriqué à partir d'un matériau, qui est choisi parmi le groupe des matériaux de type fibre et de type feutre.

10. Gaine selon la revendication 8 ou 9, dans laquelle le tube comprend un tuyau souple renforcé (5, 6; 105).

11. Gaine selon la revendication 10, dans laquelle la surface externe du tuyau souple renforcé (105) comprend au moins des fils de renfort partiellement dénudés (117), le tuyau souple (105) étant apte à être lié au manchon (102) durant ledit durcissement.

12. Gaine selon l'une quelconque des revendications 8 à 11, dans laquelle le tube (5, 6; 105) est composé d'un matériau le rendant approprié au transport d'un milieu liquide.

13. Gaine selon l'une quelconque des revendications 8 à 10, dans laquelle un lubrifiant est appliqué à la surface externe du tube (5, 6) et un fil (15, 16) court à travers le tube (5, 6) et est fixé à une extrémité (17) de celui-ci, le fil (15, 16) étant apte à tirer le tube (5, 6) et à le tourner à l'envers pour le retirer de la canalisation interne (27).

14. Gaine selon l'une quelconque des revendications 8 à 13, dans laquelle le canal séparé (25, 26; 125) a des dimensions internes correspondant à des câbles de transport d'informations numériques et analogiques et d'électricité.

15. Gaine selon l'une quelconque des revendications 8 à 13, dans laquelle le canal séparé (25, 26; 125) a un diamètre interne d'au moins 3 cm et est approprié au transport d'urine.

16. Gaine selon l'une quelconque des revendications 8 à 15, dans laquelle le manchon (2; 102) est conçu afin d'être introduit dans un conduit (20; 120) étant une canalisation d'égout.

17. Gaine selon l'une quelconque des revendications 8 à 16, dans laquelle le manchon (2; 102) a une épaisseur constante de paroi autour de sa circonférence.
